# EUROPEAN PATENT APPLICATION

(11) **EP 4 579 885 A1**
(43) Date of publication of application: **02.07.2025**
(21) Application number: 24222769.2
(22) Date of filing: 23.12.2024
(51) Int. Cl.: H01M 10/658, H01M 50/202, H01M 50/211

(54) **BATTERY MODULE AND BATTERY PACK WITH THERMALLY CONDUCTIVE POLYMER**

(30) Priority: 29.12.2023 KR 20230195929
(71) Applicant: SK On Co., Ltd., Seoul 03161 (KR)
(72) Inventor: JEONG, Ju Young, Daejeon 34124 (KR); CHOI, Yang Kyu, Daejeon 34124 (KR); RHEE, Seo Roh, Daejeon 34124 (KR); KIM, Jae Sik, Daejeon 34124 (KR); KU, Bon Seok, Daejeon 34124 (KR)
(74) Representative: Prüfer & Partner mbB Patentanwälte · Rechtsanwälte

(57) **Abstract**

Battery modules and battery packs are disclosed. In an embodiment of the disclosed technology, a battery module may include a cell assembly including a plurality of battery cells and at least one thermal transfer blocking assembly interposed between two or more adjacent battery cells of the plurality of battery cells; a module housing including a main plate structured to support the cell assembly; at least one slit formed in the main plate and arranged to face the at least one thermal transfer blocking assembly; and a thermally conductive polymer disposed in the at least one slit. A melting point of the thermally conductive polymer may be lower than a melting point of the main plate.

## Description

### TECHNICAL FIELD

The technology and implementations disclosed in this patent document generally relate to a battery module.

### BACKGROUND

Secondary batteries, unlike primary batteries, may be recharged and discharged multiple times, and are widely used in various devices and applications, including digital cameras, mobile phones, laptop computers, hybrid cars, electric cars, and energy storage systems (ESS). Common types of secondary batteries may include lithium-ion batteries, nickel-cadmium batteries, nickel-metal hydride batteries, and nickel-hydrogen batteries.

### SUMMARY

A battery device (e.g., a battery module) may include a cell assembly that includes a plurality of battery cells and a module housing structured to accommodate the cell assembly. Heat, gas, or flames generated by one of the plurality of battery cells may be transferred to adjacent battery cells, potentially causing thermal runaway or thermal propagation.

The disclosed technology can be implemented in some embodiments to provide a battery module capable of securing rigidity of a module housing.

The disclosed technology can be implemented in some embodiments to provide a battery module capable of delaying thermal transfer between battery cells.

A battery module and a battery pack implemented based on some embodiments of the disclosed technology may be widely applied in green technology fields such as electric vehicles, battery charging stations, and other solar power generation and wind power generation using batteries. Additionally, the battery module and the battery pack of the disclosed technology may be used in eco-friendly electric vehicles and hybrid vehicles to prevent climate change by suppressing air pollution and greenhouse gas emissions.

A battery module implemented based on some embodiments of the disclosed technology may include: a cell assembly including a plurality of battery cells and at least one thermal transfer blocking assembly interposed between two or more adjacent battery cells of the plurality of battery cells; a module housing including a main plate structured to support the cell assembly; at least one slit formed in the main plate and arranged to face the at least one thermal transfer blocking assembly; and a thermally conductive polymer disposed in the at least one slit, and a melting point of the thermally conductive polymer may be lower than a melting point of the main plate.

In an embodiment, the at least one thermal transfer blocking assembly may include a heat insulating member and a buffer member structured to cover at least one side of the heat insulating member.

In an embodiment, the at least one slit may face the heat insulating member. The main plate may include a chamfered portion structured to support the buffer member and defining at least a portion of the at least one slit.

In an embodiment, a second width of the at least one slit may be formed to be less than or equal to a first width of the at least one thermal transfer blocking assembly.

In an embodiment, the second width may be 50% to 90% of the first width.

In an embodiment, the thermally conductive polymer may include a binder including at least one of acrylic, epoxy, urethane or silicon, and a heat conductive filler including at least one of aluminum oxide, boron nitride or silver.

In an embodiment, the thermally conductive polymer may have a thermal conductivity of 1W/mK to 6W/mK.

In an embodiment, the at least one thermal transfer blocking assembly and the at least one slit may extend in a second direction, perpendicular to the first direction.

In an embodiment, the at least one slit may include a plurality of through-holes spaced apart from each other in the second direction.

In an embodiment, the battery module may further include a polymer block disposed in the at least one slit and at least partially covered with the thermally conductive polymer.

In an embodiment, each of the plurality of battery cells may include an electrode assembly, an electrode structured to accommodate portion accommodating the electrode assembly, and a pouch including a sealing portion configured to seal at least a portion of a circumference of the electrode accommodating portion.

In an embodiment, the module housing may include: an accommodating portion including the main plate in contact with the plurality of battery cells and the at least one thermal transfer blocking assembly and a sidewall member extending from the main plate; an end plate covering a portion of the cell assembly; and a module cover covering the cell assembly and connected to at least a portion of the accommodating portion and the end plate.

A battery module implemented based on some embodiments of the disclosed technology may include: a cell assembly including a plurality of battery cells stacked in a first direction and a thermal transfer blocking assembly disposed between two or more adjacent battery cells of the plurality of battery cells and extending in a second direction, that is perpendicular to the first direction; a module housing accommodating the cell assembly; a slit formed in the module housing, and arranged to face the thermal transfer blocking assembly, and extending in the second direction; and a thermally conductive polymer disposed in the slit.

A battery pack implemented based on some embodiments of the disclosed technology may include: a plurality of battery modules; and a pack frame structured to accommodate the plurality of battery modules. Each of the plurality of battery modules may include: a cell assembly including a plurality of battery cells and at least one thermal transfer blocking assembly interposed between two or more adjacent battery cells of the plurality of battery cells; a module housing including a main plate structured to support the cell assembly; at least one slit formed on the main plate and arranged to face the at least one thermal transfer blocking assembly; and a thermally conductive polymer disposed in the at least one slit. A melting point of the thermally conductive polymer may be lower than a melting point of the main plate.

In an embodiment, the pack frame may include a heat sink structured to support the main plate. The at least one slit may be disposed between the at least one thermal transfer blocking assembly and the heat sink.

In an embodiment of the disclosed technology, thermal transfer between battery cells may be prevented or delayed.

### BRIEF DESCRIPTION OF DRAWINGS

Certain aspects, features, and advantages of the disclosed technology are illustrated by the following detailed description with reference to the accompanying drawings.
FIG. 1 is a perspective view of a battery cell based on an embodiment.
FIG. 2 is a perspective view of a battery module based on an embodiment.
FIG. 3 is an exploded perspective view of a battery module based on an embodiment.
FIG. 4 is a schematic cross-sectional view of a battery module based on an embodiment.
FIG. 5A is a schematic diagram illustrating a heat transfer path of a battery module in a normal situation based on an embodiment. FIG. 5B is a schematic diagram illustrating a heat transfer path of a battery module in a thermal runaway situation based on an embodiment.
FIG. 6 is a perspective view of a module housing based on an embodiment.
FIG. 7A is a top view of a module housing based on an embodiment. FIG. 7B is a rear view of a module housing based on an embodiment.
FIG. 8 is a rear view of a module housing based on another embodiment.
FIG. 9 is an enlarged view of region A of FIG. 4 based on another embodiment.
FIG. 10 is an enlarged view of region A of FIG. 4 based on another embodiment.
FIG. 11 is an exploded perspective view of a battery pack based on an embodiment.

### DETAILED DESCRIPTION

Various embodiments of the disclosed technology will now be described in detail with reference to the attached drawings. These descriptions are merely examples and the disclosed technology is not limited to the specific embodiments described in this patent document.

Secondary batteries are manufactured in various forms including flexible pouch-type battery cells and rigid square or cylindrical can-type battery cells. A plurality of battery cells may be assembled into a stacked configuration to form a cell assembly.

The cell assembly may be enclosed in a case to form a battery module, and a plurality of battery modules may be arranged in a pack frame to form a battery pack. Battery packs may be used in structures such as vehicles or energy storage systems.

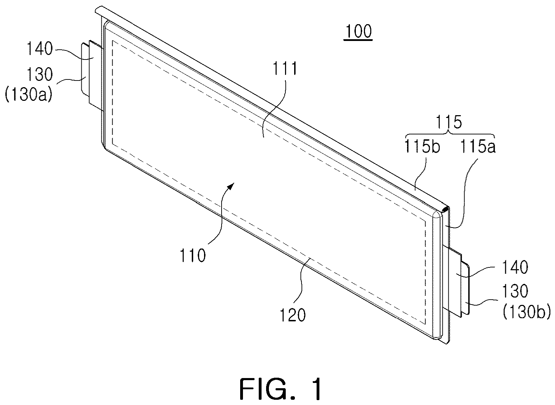

FIG. 1 is a perspective view of a battery cell in an embodiment.

Referring to FIG. 1, a battery cell 100 may include a pouch 110, an electrode assembly 120, and an electrode tab 130. In an embodiment, the battery cell 100 may function as a secondary battery. For example, the battery cell 100 may be a lithium ion battery, but is not limited thereto. Other examples of the battery cell 100 may include a nickel-cadmium battery, a nickel-metal hydride battery, and a nickel-hydrogen battery, all of which support charging and discharging.

The pouch 110 may form at least a portion of an exterior of the battery cell 100. The pouch 110 may include an electrode accommodating portion 111 configured to accommodate the electrode assembly 120 and a sealing portion 115 configured to seal at least a portion of a circumference of the electrode accommodating portion 111. The electrode accommodating portion 111 may provide a space for the electrode assembly 120 and an electrolyte.

The sealing portion 115 may be formed by bonding at least a portion of a circumference of the pouch 110. The sealing portion 115 may have a flange shape that extends outward from the electrode accommodating portion 111 having a container shape, and may be disposed along at least a portion of an outer periphery of the electrode accommodating portion 111. In an embodiment, the sealing portion 115 may include a first sealing portion 115a in which the electrode tab 130 is disposed and a second sealing portion 115b in which the electrode tab 130 is not disposed. A portion of the electrode tab 130 may extend outside the pouch 110. In order to enhance the sealing integrity of the first sealing portion 115a while ensuring electrical insulation at a position where the electrode tab 130 exits the pouch 110, the electrode tab 130 may be covered with an insulating film 140. The insulating film 140 may be formed of a film material thinner than the electrode tab 130 and may be attached to two opposite surfaces of the electrode tab 130.

In an embodiment, the electrode tabs 130 may be disposed on two opposite sides of the battery cell 100 in a longitudinal direction (e.g., Y-axis direction) to face opposite directions. For example, the electrode tab 130 may include a positive electrode tab 130a of a first polarity (e.g., a positive electrode) facing one side of the battery cell 100 in the longitudinal direction and a negative electrode tab 130b of a second polarity (e.g., a negative electrode) facing the other side of the battery cell 100 in the longitudinal direction. In an embodiment illustrated in FIG. 1, the sealing portion 115 may include two first sealing portions 115a on which the electrode tab 130 is disposed and one second sealing portion 115b on which the electrode tab 130 is not disposed. The electrode tab 130 may be referred to as an electrode lead.

The direction in which the electrode tab 130 is arranged may be designed flexibly. In an embodiment (e.g., FIG. 1), the electrode tab 130 may include a positive electrode tab 130a and a negative electrode tab 130b disposed in an opposite direction to the positive electrode tab 130a relative to the electrode assembly 120. In FIG. 1, the electrode tabs 130 are illustrated as facing opposite directions on two opposite sides of the battery cell 100 in the longitudinal direction (e.g., Y-axis direction), but the structure of the electrode tabs 130 is not limited thereto. For example, the two electrode tabs 130 may be arranged to be substantially parallel to each other in the longitudinal direction (e.g., Y-axis direction) of the battery cell 100.

As illustrated in FIG. 1, in an embodiment, the pouch 110 may be structured such that a single sheet of outer material is folded to form a sealing portion 115 on three surfaces. However, the disclosed technology is not limited to such a structure.

In an embodiment of the disclosed technology, at least a portion of the sealing portion 115 may be folded at least once. Folding at least a portion of the sealing portion 115 can improve the bonding reliability of the sealing portion 115, and an area of the sealing portion 115 may be minimized. In an embodiment, the second sealing portion 115b in which the electrode tab 130 is not disposed, among the sealing portions 115, may be folded twice and then fixed by an adhesive member (not illustrated). The bending angle or the number of folds for the second sealing portion 115b may vary. For example, in an embodiment, the second sealing portion 115b may be folded at a 90° angle with respect to the first sealing portion 115a.

The electrode assembly 120 may include a cathode plate, an anode plate, and a separator. The separator may prevent contact between the cathode plate and the anode plate. In some implementations, the electrode assembly 120 may be manufactured using various methods. In some example embodiments, a cathode, an anode, and a separator may be repeatedly disposed to form the electrode assembly. In some embodiments, the electrode assembly may be a winding type, a stacking type, a zigzag folding (z-folding) type, or a stack-folding type.

The structure of the battery cell 100 illustrated in FIG. 1 is only an example. For example, in FIG. 1, the battery cell 100 is described as a pouch-type battery cell, but the structure of the battery cell 100 is not limited thereto. For example, the battery cell 100 may be a cylindrical battery cell or a square battery cell.

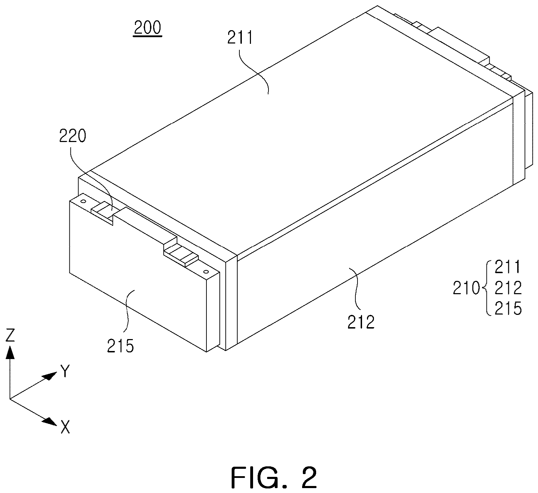

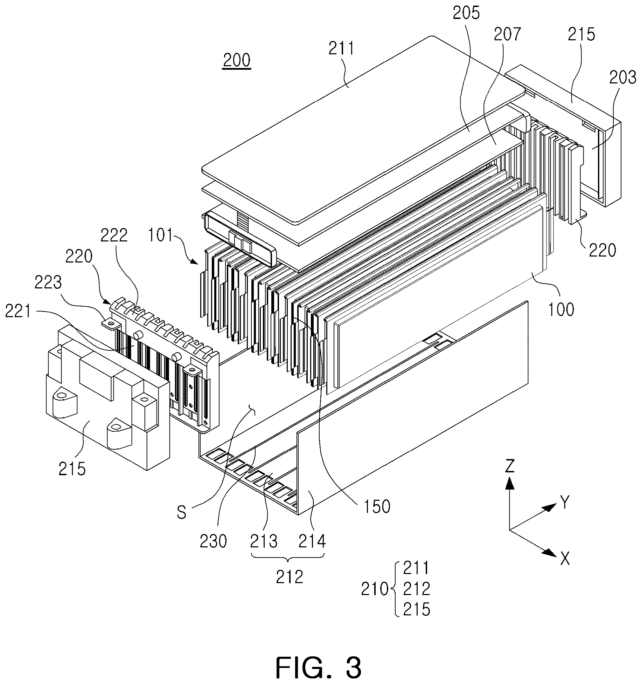

FIG. 2 is a perspective view of a battery module based on an embodiment. FIG. 3 is an exploded perspective view of a battery module based on an embodiment.

Referring to FIG. 2 and/or FIG. 3, a battery module 200 may include a cell assembly 101 and a module housing 210.

The cell assembly 101 may include a plurality of battery cells 100 (e.g., the battery cell 100 of FIG. 1) and at least one thermal transfer blocking assembly 150 interposed between two or more adjacent battery cells of the plurality of battery cells 100. The plurality of battery cells 100 and the thermal transfer blocking assembly 150 may be stacked in a first direction (e.g., the X-direction). The battery cells 100 and the thermal transfer blocking assembly 150 may extend in a second direction (e.g., the Y-axis direction), substantially perpendicular to the first direction (the X-axis direction).

The module housing 210 may form at least a portion of an exterior of the battery module 200, and may form an internal space S to accommodate the cell assembly 101 and/or a busbar assembly 220.

The module housing 210 may include an accommodating portion 212 surrounding a lower surface and a side surface of the cell assembly 101. The accommodating portion 212 may include a main plate 213 covering the lower surface of the cell assembly 101 and a sidewall member 214 extending from the main plate 213. The main plate 213 may support the cell assembly 101. The sidewall member 214 may cover at least a portion of the side surface of the cell assembly 101. At least a portion of the internal space S may be surrounded by the main plate 213, the sidewall member 214, and an end plate 215. In an embodiment, the main plate 213 and the sidewall member 214 may be formed integrally.

The module housing 210 may include the end plate 215 covering a portion of the side surface of the cell assembly 101. In an embodiment, the end plate 215 may be connected to an end portion of the accommodating portion 212 in the longitudinal direction (e.g., Y-axis direction). The end plate 215 may cover a portion of the side surface of the cell assembly 101 and at least a portion of the busbar assembly 220.

The module housing 210 may include a module cover 211 forming at least a portion of the exterior of the battery module 200 together with the accommodating portion 212 and/or the end plate 215. For example, the module cover 211 may be connected to the accommodating portion 212 and/or the end plate 215 and may surround at least a portion of the cell assembly 101. The module cover 211 may be disposed on one side of the cell assembly 101 and may cover the cell assembly 101.

In an embodiment, the module housing 210 may be formed of a material having high thermal conductivity, such as a metal. For example, the module housing 210 may be formed of aluminum and/or stainless steel. However, the material of the module housing 210 is not limited thereto. The module housing 210 may be referred to as a housing, a case, or a module case.

The battery module 200 may include at least one slit 230 formed in the module housing 210. An example structure of the slit 230 will be described below.

The battery module 200 may include a busbar assembly 220.

The busbar assembly 220 may include an electrically conductive busbar 221 electrically connected to an electrode tab (e.g., the electrode tab 130 of FIG. 1) of the battery cell 100 and a busbar frame 222 supporting the busbar. The busbar assembly 220 may include at least one connection terminal 223 for electrical connection to external components. The electrode tab 130 of the battery cell 100 may be electrically connected to external components outside the battery module 200 through the busbar 221 and the connection terminal 223.

The battery module 200 may include an insulating cover 203 disposed between the end plate 215 and the busbar assembly 220. The insulating cover 203 may prevent contact between the busbar 221 and the end plate 215.

The battery module 200 may include a sensor assembly 205. The sensor assembly 205 may be connected to the busbar assembly 220, and may transmit information (e.g., temperature and/or voltage) of the battery module 200 detected by the busbar assembly 220 to external components outside the battery module 200. The sensor assembly 205 may include a temperature sensor, a voltage detection terminal, and a substrate (e.g., a flexible printed circuit board). At least a portion of the sensor assembly 205 may be disposed between the module cover 211 and the cell assembly 101.

The battery module 200 may include an insulating cover 207. The insulating cover 207 may protect components of the battery module 200 (e.g., the sensor assembly 205) from gases, flames, and/or conductive particles generated by the cell assembly 101. The insulating cover 207 may include a heat-resistant or fire-resistant material (e.g., mica). The insulating cover 207 may be disposed between the module cover 211 and the cell assembly 101. For example, the insulating cover 207 may be disposed between at least a portion of the sensor assembly 205 (e.g., the substrate portion) and the cell assembly 101.

For convenience of explanation, certain components in the drawing are omitted or exaggerated. For example, the number of battery cells 100 and/or the shape of the busbar assembly 220 may be selectively designed. In an embodiment, the battery module 200 may include a conductive member (e.g., a long busbar) to adjust a position of the connection terminal of the busbar assembly 220.

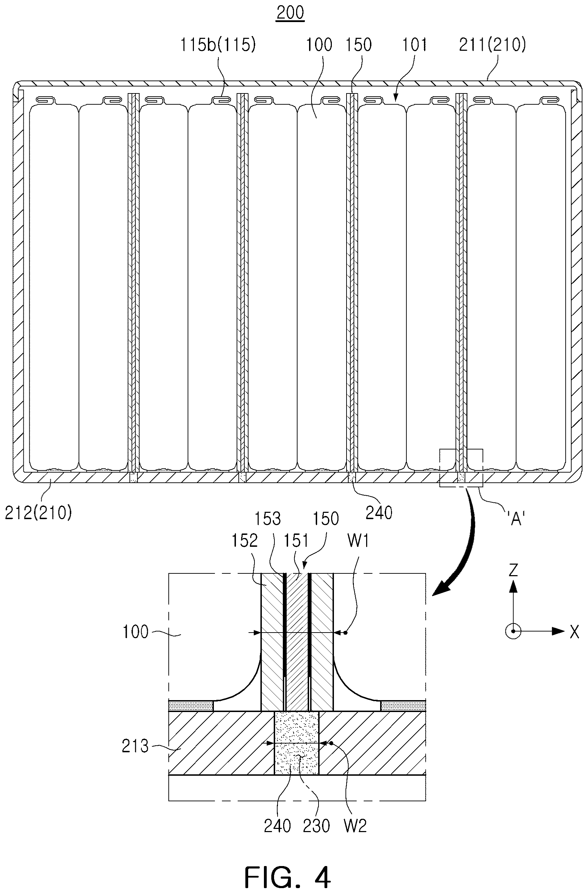

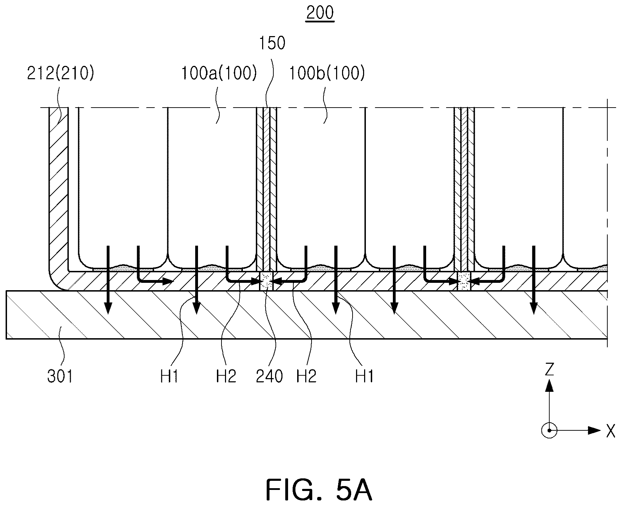

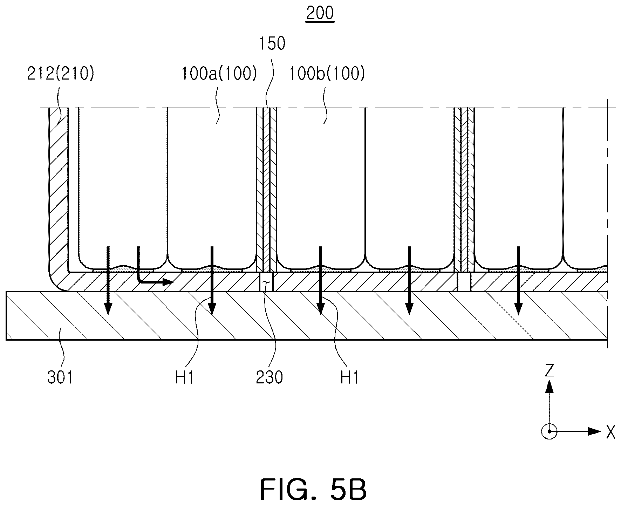

FIG. 4 is a schematic cross-sectional view of a battery module based on an embodiment. FIG. 5A is a schematic diagram illustrating a heat transfer path of the battery module in a normal state based on an embodiment. FIG. 5B is a schematic diagram illustrating a heat transfer path of the battery module in a thermal runaway state based on an embodiment.

Referring to FIGS. 4, 5A, and/or 5B, the battery module 200 may include a cell assembly 101 including a battery cell 100 and a thermal transfer blocking assembly 150, a module housing 210, and a thermally conductive polymer 240. The descriptions of the battery cell 100, the thermal transfer blocking assembly 150, the cell assembly 101, and the module housing 210 of FIGS. 2 and/or 3 may be applied to the battery cell 100, the thermal transfer blocking assembly 150, the cell assembly 101, and the module housing 210 of FIGS. 4, 5A, and/or 5B.

At least a portion of the heat generated by some of the plurality of battery cells 100 may be transferred to other battery cells 100. The cell assembly 101 may include a thermal transfer blocking assembly 150 to delay heat transfer between the plurality of battery cells 100. In an embodiment, the thermal transfer blocking assembly 150 may be referred to as a thermal barrier.

The thermal transfer blocking assembly 150 may include an insulating member 151. The insulating member 151 may block or reduce heat transfer between adjacent battery cells 100. For example, the insulating member 151 may include an insulating material (e.g., mica, silica wool, and/or silica gel). In an embodiment, the insulating member 151 may be replaced with a material having heat resistance and insulating properties. In an embodiment, the insulating member 151 may maintain stable properties for a specified period of time at a temperature of 800°C or higher.

The thermal transfer blocking assembly 150 may include a buffer member 152. The buffer member 152 may absorb at least part of the expansion pressure caused by a swelling phenomenon of the battery cells 100. For example, the buffer member 152 may include at least one of polyurethane, silicone or rubber. A portion of the battery cell 100 (e.g., the electrode accommodating portion 111 of FIG. 1) may be pressurized by the elasticity of the buffer member 152. The electrode accommodating portion 111 may be pressurized to reduce the swelling phenomenon of the battery cell 100.

The buffer member 152 may be disposed on the insulating member 151. For example, the buffer member 152 may cover at least a portion of one side or the other side of the insulating member 151. In an embodiment, the thermal transfer blocking assembly 150 may include an adhesive layer 153. The adhesive layer 153 may be disposed between the insulating member 151 and the buffer member 152. The adhesive layer 153 may include an adhesive tape or another adhesive material. For example, the adhesive layer 153 may include an adhesive material such as a silicone-based material, an acrylic-based material, a rubber-based material, a hot melt-based material, an epoxy-based material, a PSA-based material, or a urethane-based material. However, the material of the adhesive layer 153 is not limited to these examples, as long as it can effectively bond the insulating member 151 and the buffer member 152.

The cell assembly 101 may be accommodated in the module housing 210. For example, each of the plurality of battery cells 100 may be disposed on the main plate 213 of the accommodating portion 212 in a state in which the second sealing portion 115b faces the module cover 211. For example, the battery cell 100 may be thermally connected to the main plate 213 using a thermal adhesive.

At least a portion of the heat generated by some of the battery cells 100, among the plurality of battery cells 100, may be transferred to other battery cells 100 through the accommodating portion 212 of the module housing 210. For example, the plurality of battery cells 100 may include a first battery cell 100a and a second battery cell 100b spaced apart from the first battery cell 100a with the thermal transfer blocking assembly 150 interposed therebetween. In an embodiment, the first battery cell 100a may be referred to as a trigger battery cell and the second battery cell 100b may be referred to as an adjacent battery cell.

The accommodating portion 212 (e.g., the main plate 213) may include at least one slit 230. The slit 230 may extend in the second direction (e.g., Y-axis direction), substantially perpendicular to the first direction (e.g., X-axis direction). In an embodiment, the battery module 200 may include a plurality of slits 230. The plurality of slits 230 may be spaced apart from each other in the first direction (e.g., X-axis direction).

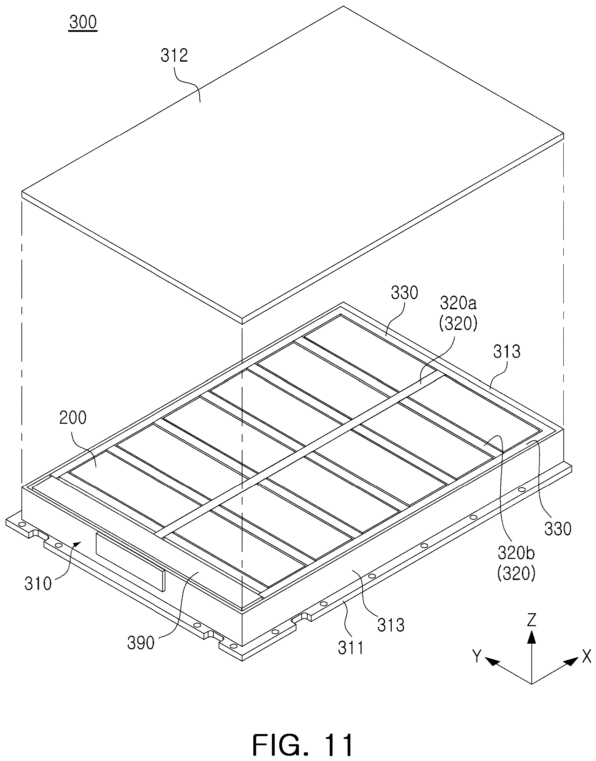

The heat generated by the battery cell 100 may be transferred to other adjacent points. For example, at least a portion of the heat generated by the battery cell 100 may be transferred to a heat sink 301 through a first heat path H1. The heat sink 301 may be a battery pack (e.g., a pack frame 310 of FIG. 11) supporting the battery module 200. For example, the pack frame 310 may include the heat sink 301 supporting the main plate 213. At least a portion of the heat generated by the battery cell 100 may flow along the accommodating portion 212 of the module housing 210 through a second heat path H2.

The slit 230 may reduce heat transfer through the accommodating portion 212 of the module housing 210. For example, in the main plate 213 in which the slit 230 is not formed, at least a portion of the heat generated by some battery cells (e.g., the first battery cell 100a), among the plurality of battery cells 100, may be transferred to other battery cells (e.g., the second battery cell 100b) through the main plate 213.

The slit 230 may be formed to correspond to the thermal transfer blocking assembly 150. For example, the slit 230 may face at least a portion of the thermal transfer blocking assembly 150. The slit 230 may be formed below the thermal transfer blocking assembly 150. For example, the slit 230 may be disposed between the thermal transfer blocking assembly 150 and the heat sink 301. By aligning the slit 230 with at least a portion of the thermal transfer blocking assembly 150, the slit 230 may reduce heat transfer through the accommodating portion 212 disposed in a lower portion of the thermal transfer blocking assembly 150. In an embodiment, a centerline of the slit 230 may be substantially colinear with a centerline of the thermal transfer blocking assembly 150.

The thermally conductive polymer 240 may be disposed in the slit 230. For example, in the normal state (e.g., FIG. 5A), the thermally conductive polymer 240 may be disposed in the slit 230, thereby improving the rigidity of the module housing 210 (e.g., the accommodating portion 212). The normal state may refer to a state in which no flames and/or gas is emitted from the plurality of battery cells 100 or the maximum temperature of the plurality of battery cells 100 is less than a specified threshold temperature.

The thermally conductive polymer 240 may be referred to as a thermal resin, a thermal adhesive, or a heat transfer member. The thermally conductive polymer 240 may be a thermal resin layer. For example, the thermally conductive polymer 240 may have a thermal conductivity of 1 W/mK to 6 W/mK. Due to the thermal conductivity of the thermally conductive polymer as described above, heat dissipation of the battery module 200 in the normal state may be performed using the main plate 213 along with the thermally conductive polymer 240.

In an embodiment, the thermally conductive polymer 240 may include a binder including at least one of acrylic, epoxy, urethane or silicone. The thermally conductive polymer 240 may include a thermally conductive filler including at least one of aluminum oxide (alumina), boron nitride or silver.

In an embodiment, the thermally conductive polymer 240 may include a material having a residual amount of 40 to 60% at 800°C in a thermogravimetric analysis (TGA) heated from room temperature to 1000°C at 20°C per minute.

In the normal state (e.g., FIG. 5A), the thermally conductive polymer 240 may be in contact (e.g., in thermal contact) with the thermal transfer blocking assembly 150 and/or the main plate 213. The thermally conductive polymer 240 may dissipate at least part of the heat generated by the battery cell 100. For example, in the normal state (e.g., FIG. 5A) in which the thermally conductive polymer 240 is not molten, at least a portion of the heat transferred to a portion of the main plate 213 may be transferred to another portion of the main plate 213 through the thermally conductive polymer 240.

In an embodiment, the number of slits 230 and thermally conductive polymers 240 may be designed based on the number of unit cells of the cell assembly 101. For example, the number of slits 230 and thermally conductive polymers 240 may be the same as the number of thermal transfer blocking assemblies 150, respectively. The thermally conductive polymer 240 may be disposed in the slits 230, thereby improving the rigidity of the accommodating portion 212 of the module housing 210, in the normal state (e.g., FIGS. 4 and 5A).

The thermally conductive polymer 240 may melt in a thermal runaway state (e.g., FIG. 5B). For example, a melting point of the thermally conductive polymer 240 may be lower than a melting point of the main plate 213. When the thermally conductive polymer 240 melts, heat transferred to a portion of the main plate 213 disposed on one side of the slit 230 may no longer be transferred to another portion of the main plate 213 disposed on the other side of the slit 230 through the thermally conductive polymer 240. A thermal conductivity of an empty space (e.g., air) formed by the slit 230 is lower than a thermal conductivity of the thermally conductive polymer 240, thus reducing the transmission of the heat generated by the first battery cell 100a to the second battery cell 100b. For example, the thermal conductivity of the main plate 213 with the melted thermally conductive polymer 240 may be lower than the thermal conductivity of the main plate 213 on which the thermally conductive polymer 240 is disposed.

When the thermally conductive polymer 240 melts, heat transfer between the battery cells 100 through the main plate 213 may be reduced, delaying the thermal propagation between the battery cells 100. For example, in the battery module 200 including the slit 230 implemented based on an embodiment of the disclosed technology and the thermally conductive polymer 240 disposed in the slit 230, the heat transfer conducted through the main plate 213 may be reduced. In a thermal runaway state of the battery module 200, the heat energy flow may be controlled, helping to prevent damage to a battery cell (e.g., the second battery cell 100b) adjacent to a battery cell in which the fire occurred (e.g., the first battery cell 100a) (or the trigger battery cell) .

In an example embodiment of the disclosed technology, in the battery module 200 including the slit 230 and the thermally conductive polymer 240, when flame, gas, and/or conductive particles are emitted from a first battery cell 100a, a temperature of the second battery cell 100b spaced apart from the first battery cell 100a with the thermal transfer blocking assembly 150 interposed therebetween may be maintained at about 25°C to 28°C during a specified period of time. In a battery module of a comparative example that does not include a slit 230 and a thermally conductive polymer 240 disposed in the slit 230, when flame, gas, and/or conductive particles are emitted from the first battery cell 100a, a temperature of the second battery cell 100b spaced apart from the first battery cell 100a with the thermal transfer blocking assembly 150 interposed therebetween may be maintained at about 70°C to 100°C during a specified period of time. The thermally conductive polymer 240 may melt, so that the thermal propagation to the battery cells 100 spaced apart from each other with the thermal transfer blocking assembly 150 interposed therebetween may be delayed, and the thermal runaway and the thermal propagation in the battery module 200 may be delayed.

The slit 230 of the module housing 210 may be designed to correspond to a width of the thermal transfer blocking assembly 150. For example, a second width W2 of the slit 230 may be smaller than a first width W1 of the thermal transfer blocking assembly 150. In an embodiment, the second width W2 may be 50% to 90% of the first width W1 of the thermal transfer blocking assembly 150.

The second width W2 of the slit 230 may be formed to be 50% or more of the first width W1 of the thermal transfer blocking assembly 150, so that a heat transfer path between the plurality of battery cells 100 may be blocked in the event of ignition in some of the plurality of battery cells 100. For example, when the thermally conductive polymer 240 disposed in the slit 230 melts, it creates an empty space that can reduce heat transfer. In addition, by setting the second width W2 of the slit 230 to be 90% or less of the first width W1 of the thermal transfer blocking assembly 150, the thermal transfer blocking assembly 150 may be supported by the main plate 213, improving the ease of assembly of the thermal transfer blocking assembly 150.

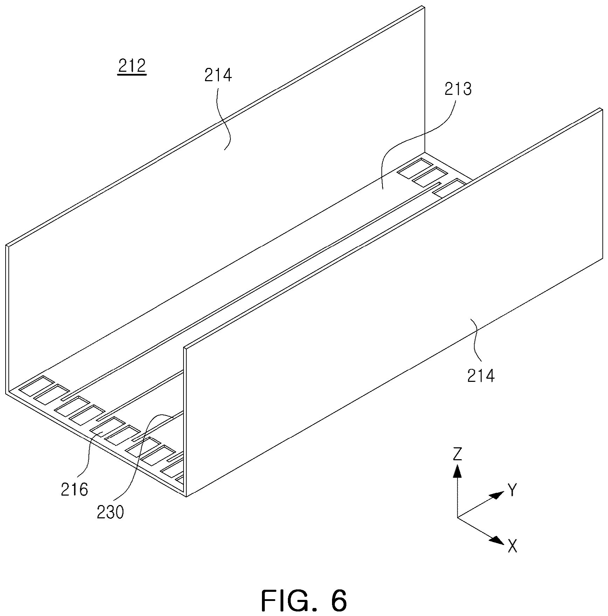

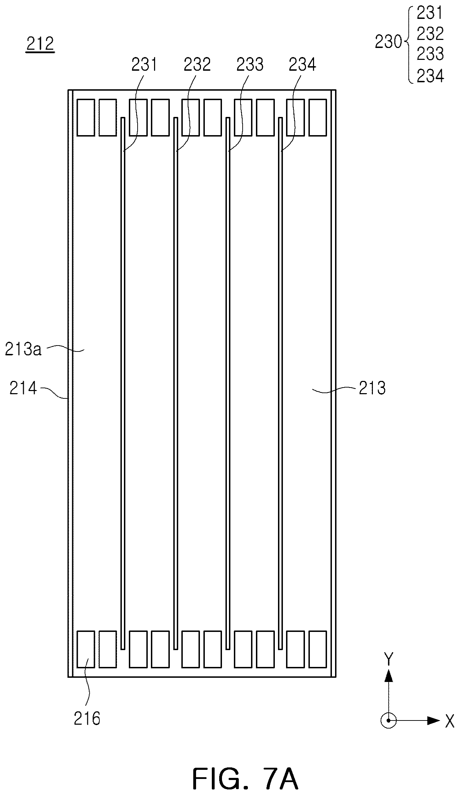

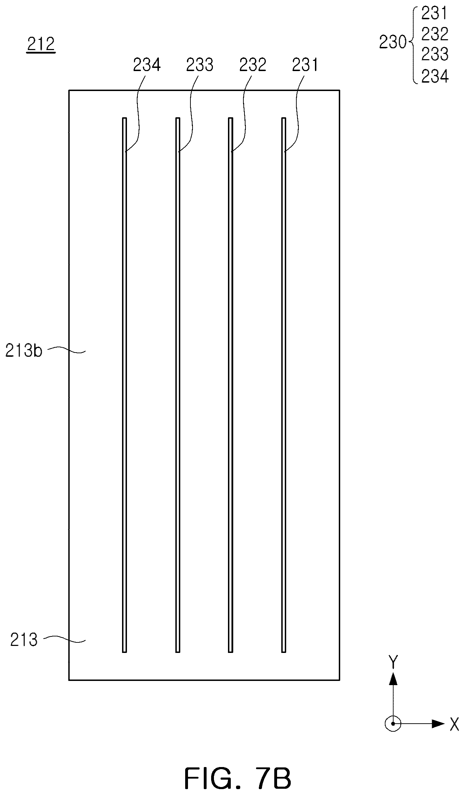

FIG. 6 is a perspective view of a module housing based on an embodiment. FIG. 7A is a top view of the module housing based on an embodiment. FIG. 7B is a rear view of the module housing based on an embodiment.

Referring to FIG. 6, FIG. 7A and/or FIG. 7B, the accommodating portion 212 may include a main plate 213 in which a slit 230 is formed, and a sidewall member 214 extending from the main plate 213. The descriptions of the accommodating portion 212 and the slit 230 of FIGS. 2 to 5B may be applied to the accommodating portion 212 and the slit 230 of FIGS. 6, 7A and/or 7B.

The main plate 213 may have a shape for supporting a component of a battery module (e.g., the battery module 200 of FIG. 3). In an embodiment, the main plate 213 may include a busbar accommodating groove 216 for settling a portion (e.g., a busbar frame 222) of a busbar assembly (e.g., the busbar assembly 220 of FIG. 3). The busbar accommodating groove 216 may be formed on a first surface 213a of the main plate 213.

The slit 230 may be formed to penetrate through the main plate 213. For example, the main plate 213 may include a first surface 213a facing the cell assembly (e.g., the cell assembly 101 of FIG. 3) and a second surface 213b opposite to the first surface 213a. The slit 230 may be a through-hole extending from the first surface 213a of the main plate 213 to a second surface 213b.

The slit 230 may be provided in plural. For example, the slit 230 may include a plurality of slits 231, 232, 233 and 234 spaced apart from each other in the first direction (e.g., the X-axis direction). The plurality of slits 231, 232, 233 and 234 may be disposed to be substantially parallel to each other.

In FIGS. 6, 7A, and 8, the accommodating portion 212 is illustrated as including four slits 230, but the number of slits 230 is not limited to this example. For example, the number of slits 230 may be designed based on the thermal transfer blocking assembly 150 of FIG. 4.

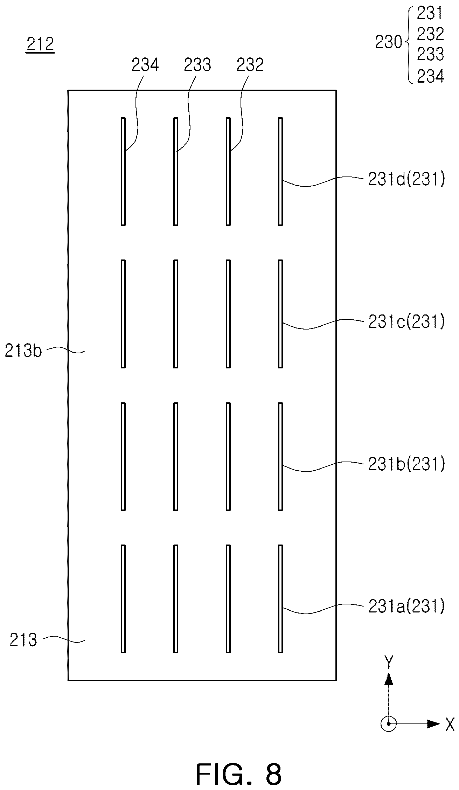

FIG. 8 is a rear view of a module housing based on another embodiment.

Referring to FIG. 8, the accommodating portion 212 may include a main plate 213 having a slit 230 formed therein, the slit 230 including a plurality of slits 231, 232, 233 and 234. The descriptions of the accommodating portion 212 and the slit 230 of FIGS. 6, 7A and 7B may be applied to the accommodating portion 212 and the slit 230 of FIG. 8.

The slit 230 may be provided as a plurality of slits 231, 232, 233 and 234 arranged in the first direction (e.g., X-axis direction). In an embodiment, each of the plurality of slits 231, 232, 233 and 234 may be formed with a plurality of through-holes spaced apart from each other in the second direction (e.g., Y-axis direction). For example, in an embodiment, the first slit 231 may include a plurality of through-holes 231a, 231b, 231c and 231d spaced apart from each other in the second direction (e.g., Y-axis direction) . Since the slit 230 is formed with the plurality of through-holes spaced apart from each other in the second direction (e.g., Y-axis direction), the durability of the main plate 213 may be improved.

FIG. 8 illustrates a structure in which one slit (e.g., the first slit 231) includes four through-holes, but the number of through-holes is not limited to this example.

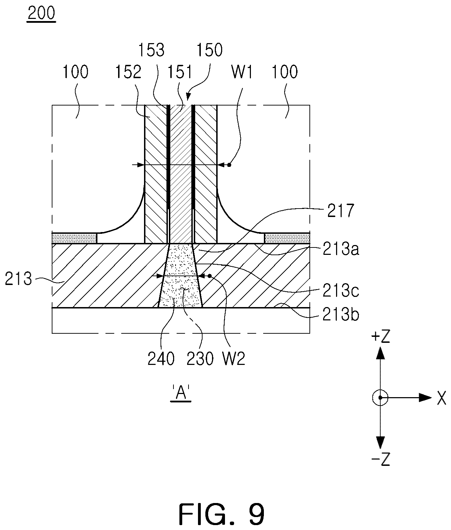

FIG. 9 is an enlarged view of region A of FIG. 4 in another embodiment.

Referring to FIG. 9, the battery module 200 may include the battery cell 100, the thermal transfer blocking assembly 150, the module housing (e.g., the main plate 213), the slit 230, and the thermally conductive polymer 240.

The descriptions of the battery cell 100, the thermal transfer blocking assembly 150, the battery module 200, the main plate 213, the slit 230 and the thermally conductive polymer 240 of FIG. 4, FIG. 5A and/or FIG. 5B may be applied to the battery cell 100, the thermal transfer blocking assembly 150, the battery module 200, the main plate 213, the slit 230 and the thermally conductive polymer 240 of FIG. 9.

In an embodiment, the main plate 213 may include a chamfered portion 217. The chamfered portion 217 may be a portion of the main plate 213 defining at least a portion of the slit 230. In an embodiment, the chamfered portion 217 may be referred to as a portion of the main plate 213 that forms the slit 230 and protrudes at an incline. The slit 230 may be formed to be at least partially inclined, and the chamfered portion 217 may surround the slit 230.

The main plate 213 may include the first surface 213a facing the battery cell 100, the second surface 213b opposite to the first surface 213a, and a third surface 213c extending from the first surface 213a to the second surface 213b. The third surface 213c may surround at least a portion of the slit 230. The third surface 213c may extend in a direction inclined with respect to the first direction (e.g., X-axis direction). The chamfered portion 217 may form at least a portion of the third surface 213c. The second width W2 of the slit 230 may be formed to decrease as the slit 230 approaches the battery cell 100 and/or the thermal transfer blocking assembly 150. For example, the second width W2 of the slit 230 may be formed to decrease as the slit 230 approaches the battery module 200 from a lower portion thereof (e.g., in a -Z-direction) to an upper portion thereof (e.g., in a +Z-direction) .

The main plate 213 may support a portion of the thermal transfer blocking assembly 150. For example, the chamfered portion 217 of the main plate 213 may be in contact with the buffer member 152, and may support the buffer member 152. A settling surface of the thermal transfer blocking assembly 150 may be secured by the chamfered portion 217. The settling surface of the thermal transfer blocking assembly 150 may be secured to improve the ease of assembly of the thermal transfer blocking assembly 150.

The main plate 213 may prevent gas generated in the battery module 200 from being discharged in an unintended direction. For example, a contact area between the thermal transfer blocking assembly 150 and the main plate 213 may be increased by the chamfered portion 217. The contact area between the thermal transfer blocking assembly 150 and the main plate 213 may be increased, thus reducing or preventing leakage of gas generated in the battery cell 100 to the outside of the battery module 200.

The thermally conductive polymer 240 may be formed to correspond to the shape of the slit 230. For example, a width of the thermally conductive polymer 240 may be formed to decrease as the thermally conductive polymer 240 approaches the battery cell 100 and/or the thermally conductive assembly 150.

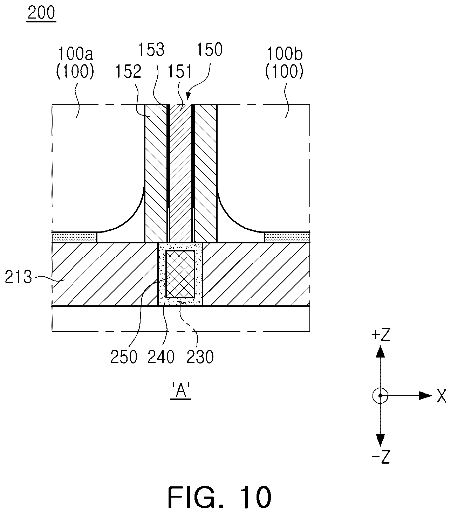

FIG. 10 is an enlarged view of region A of FIG. 4 in another embodiment.

Referring to FIG. 10, the battery module 200 may include the battery cell 100, the thermally conductive assembly 150, the module housing (e.g., the main plate 213), the slit 230, the thermally conductive polymer 240, and a polymer block 250. The descriptions of the battery cell 100, the thermal transfer blocking assembly 150, the battery module 200, the main plate 213, the slit 230 and the thermally conductive polymer 240 of FIGS. 4, 5A and/or 5B may be applied to the battery cell 100, the thermal transfer blocking assembly 150, the battery module 200, the main plate 213, the slit 230 and the thermally conductive polymer 240 of FIG. 10. In an embodiment, the battery module 200 including the polymer block 250 of FIG. 10 may be applied to the battery module 200 including the chamfered portion 217 of FIG. 9.

In an embodiment, the polymer block 250 may be disposed in the slit 230. For example, in a normal state in which no flames and/or gas is emitted from the battery cell 100, or in which a maximum temperature of the battery cell 100 is less than a specified temperature, the polymer block 250 may be disposed in the slit 230, thereby improving the rigidity of the module housing (e.g., the main plate 213).

In an embodiment, in a thermal runaway state in which flames and/or gas is emitted from the battery cell 100, or in which the maximum temperature of the battery cell 100 is equal to or more than a specified temperature, the polymer block 250 may melt. For example, a melting point of the polymer block 250 may be lower than a melting point of the main plate 213. As the polymer block 250 melts, at least a portion of the heat transferred to a portion of the main plate 213 disposed on one side of the slit 230 may not be transferred to another portion of the main plate 213 disposed on the other side of the slit 230 through the polymer block 250. Since a thermal conductivity of the empty space (e.g., air) formed by the slit 230 is lower than a thermal conductivity of the polymer block 250, the transmission of heat generated by the first battery cell 100a to the second battery cell 100b may be reduced.

At least a portion of the polymer block 250 may be covered with the thermally conductive polymer 240. For example, in an embodiment, the thermally conductive polymer 240 may be applied to the slit 230 and/or the polymer block 250 in a state in which the polymer block 250 is disposed in the slit 230 formed in the main plate 213. In another example, the polymer block 250 to which the thermally conductive polymer 240 is applied may be inserted into the slit 230.

At least a portion of the polymer block 250 and the thermally conductive polymer 240 may melt, so that the heat transfer between the battery cells 100 through the main plate 213 may be reduced, and the heat propagation between the battery cells 100 may be delayed.

The polymer block 250 may be formed of a material that melts in the thermal runaway state. For example, the polymer block 250 may include polypropylene.

In an embodiment, the polymer block 250 may be replaced with an insulating sheet. For example, the polymer block 250 may melt before the module housing 210 to reduce a thermal conductance of a portion of the module housing 210 disposed below the thermal transfer blocking assembly 150.

In an embodiment not illustrated, the thermally conductive polymer 240 may be replaced with the polymer block 250. For example, the battery module 200 may include a polymer block 250 disposed in the slit 230 without including the thermally conductive polymer 240.

FIG. 11 is an exploded perspective view of a battery pack in an embodiment.

Referring to FIG. 11, a battery pack 300 may include a plurality of battery modules 200 and a pack frame 310 accommodating the plurality of battery modules 200. The descriptions of the battery module 200 described previously (e.g., FIGS. 2 to 10) may be applied to the battery module 200 of FIG. 11.

The pack frame 310 may accommodate a component of the battery pack 300 (e.g., the battery module 200). The pack frame 310 may include a bottom member 311 supporting the battery module 200, a pack cover 312 covering the battery module 200, and a pack sidewall 313 surrounding at least a portion of the bottom member 311 and the pack cover 312. The floor member 311 may support an accommodating portion of the battery module 200 (e.g., the accommodating portion 212 of FIG. 2).

The pack frame 310 may include a partition wall 320 crossing at least portions of the plurality of battery modules 200. For example, an accommodating space of the pack frame 310 may be divided into a plurality of spaces by the partition wall 320. The partition wall 320 may be installed to cross the accommodating space to reinforce the rigidity of the pack frame 310. In an embodiment, the partition wall 320 may include a first partition wall 320a crossing the plurality of battery modules 200 and a plurality of second partition walls 320b, substantially perpendicular to the first partition wall 320a.

In an embodiment, the battery pack 300 may include a duct member 330. The duct member 330 may include an exhaust space for providing a path for gas and/or flames discharged from the battery module 200. The duct member 330 may be disposed in the pack frame 310. The duct member 330 may surround at least a portion of the battery module 200. For example, the gas and/or flames generated by the battery cell (e.g., battery cell 100 of FIG. 1) of the battery module 200 may be transferred to the outside of the battery pack 300 by passing through the exhaust space of the duct member 330. In the disclosed technology, the duct member 330 may be referred to as an exhaust duct, or an exhaust member.

The battery pack 300 may include a battery controller 390 for controlling the battery module 200. The battery controller 390 may be disposed in the pack frame 310. The battery controller 390 may include a battery management system (BMS). The configuration of the battery controller 390 is known in various forms, and thus, a detailed description thereof is omitted. In an embodiment, the battery controller 390 may be referred to as a processor.

The structure of the battery pack 300 of FIG. 11 is only an example. For example, the number of battery modules 200 included in the battery pack 300, and the structure of the battery frame 310 and/or the duct member 330 may be designed selectively.
Aspect 1) A battery module, comprising: a cell assembly including a plurality of battery cells and at least one thermal transfer blocking assembly interposed between two or more adjacent battery cells of the plurality of battery cells, a module housing including a main plate structured to support the cell assembly, at least one slit formed in the main plate and arranged to face the at least one thermal transfer blocking assembly, and a thermally conductive polymer disposed in the at least one slit, wherein a melting point of the thermally conductive polymer is lower than a melting point of the main plate.
Aspect 2) The battery module of Aspect 1, wherein the at least one thermal transfer blocking assembly includes a heat insulating member and a buffer member structured to cover at least one side of the heat insulating member.
Aspect 3) The battery module of aspect 2, wherein the at least one slit faces the heat insulating member, and
   the main plate includes a chamfered portion structured to support the buffer member and define at least a portion of the at least one slit.
Aspect 4) The battery module of any one of aspects 1 to 3, wherein a second width of the at least one slit is formed to be less than or equal to a first width of the at least one thermal transfer blocking assembly.
Aspect 5) The battery module of aspect 4, wherein the second width is 50% to 90% of the first width.
Aspect 6) The battery module of any one of aspects 1 to 5, wherein the thermally conductive polymer includes: a binder including at least one of acrylic, epoxy, urethane, or silicon, and a heat conductive filler including at least one of aluminum oxide, boron nitride, or silver.
Aspect 7) The battery module of any one of aspects 1 to 6, wherein the thermally conductive polymer has a thermal conductivity of 1W/mK to 6W/mK.
Aspect 8) The battery module of any one of aspects 1 to 7, wherein the plurality of battery cells are stacked in a first direction, and the at least one thermal transfer blocking assembly and the at least one slit extend in a second direction, perpendicular to the first direction.
Aspect 9) The battery module of aspect 8, wherein the at least one slit includes a plurality of through-holes spaced apart from each other in the second direction.
Aspect 10) The battery module of any one of aspects 1 to 9, further comprising: a polymer block disposed in the at least one slit and at least partially covered with the thermally conductive polymer.
Aspect 11) The battery module of any one of aspects 1 to 10, wherein each of the plurality of battery cells includes an electrode assembly, an electrode accommodating portion structured to accommodate the electrode assembly, and a pouch including a sealing portion configured to seal at least a portion of a circumference of the electrode accommodating portion.
Aspect 12) The battery module of any one of aspects 1 to 11, wherein the module housing includes: an accommodating portion including the main plate in contact with the plurality of battery cells and the at least one thermal transfer blocking assembly and a sidewall member extending from the main plate, an end plate covering a portion of the cell assembly, and a module cover covering the cell assembly and connected to at least a portion of the accommodating portion and the end plate.
Aspect 13) The battery module of any one of aspects 1 to 12, wherein the plurality of battery cells are stacked in a first direction and the thermal transfer blocking assembly is disposed between two or more adjacent battery cells of the plurality of battery cells and extending in a second direction that is perpendicular to the first direction, and wherein the slit is extended in the second direction.
Aspect 14) A battery pack, comprising: a plurality of battery modules, and a pack frame structured to accommodate the plurality of battery modules, wherein each of the plurality of battery modules includes: a cell assembly including a plurality of battery cells and at least one thermal transfer blocking assembly interposed between two or more adjacent battery cells of the plurality of battery cells,
   a module housing including a main plate structured to support the cell assembly, at least one slit formed on the main plate and arranged to face the at least one thermal transfer blocking assembly, and a thermally conductive polymer disposed in the at least one slit, wherein a melting point of the thermally conductive polymer is lower than a melting point of the main plate.
Aspect 15) The battery pack of aspect 14, wherein the pack frame includes a heat sink structured to support the main plate, and the at least one slit is disposed between the at least one thermal transfer blocking assembly and the heat sink.

## Claims

1. A battery module, comprising:
a cell assembly including a plurality of battery cells and at least one thermal transfer blocking assembly interposed between two or more adjacent battery cells of the plurality of battery cells;
a module housing including a main plate structured to support the cell assembly;
at least one slit formed in the main plate and arranged to face the at least one thermal transfer blocking assembly; and
a thermally conductive polymer disposed in the at least one slit,
wherein a melting point of the thermally conductive polymer is lower than a melting point of the main plate.

2. The battery module of claim 1,
wherein the at least one thermal transfer blocking assembly includes a heat insulating member and a buffer member structured to cover at least one side of the heat insulating member.

3. The battery module of claim 2,
wherein the at least one slit faces the heat insulating member, and
the main plate includes a chamfered portion structured to support the buffer member and define at least a portion of the at least one slit.

4. The battery module of any one of claims 1 to 3, wherein a second width of the at least one slit is formed to be less than or equal to a first width of the at least one thermal transfer blocking assembly.

5. The battery module of claim 4,
wherein the second width is 50% to 90% of the first width.

6. The battery module of any one of claims 1 to 5, wherein the thermally conductive polymer includes: a binder including at least one of acrylic, epoxy, urethane, or silicon; and a heat conductive filler including at least one of aluminum oxide, boron nitride, or silver.

7. The battery module of any one of claims 1 to 6, wherein the thermally conductive polymer has a thermal conductivity of 1W/mK to 6W/mK.

8. The battery module of any one of claims 1 to 7, wherein the plurality of battery cells are stacked in a first direction, and
the at least one thermal transfer blocking assembly and the at least one slit extend in a second direction, perpendicular to the first direction.

9. The battery module of claim 8,
wherein the at least one slit includes a plurality of through-holes spaced apart from each other in the second direction.

10. The battery module of any one of claims 1 to 9, further comprising:
a polymer block disposed in the at least one slit and at least partially covered with the thermally conductive polymer.

11. The battery module of any one of claims 1 to 10, wherein each of the plurality of battery cells includes an electrode assembly, an electrode accommodating portion structured to accommodate the electrode assembly, and a pouch including a sealing portion configured to seal at least a portion of a circumference of the electrode accommodating portion.

12. The battery module of any one of claims 1 to 11, wherein the module housing includes:
an accommodating portion including the main plate in contact with the plurality of battery cells and the at least one thermal transfer blocking assembly and a sidewall member extending from the main plate;
an end plate covering a portion of the cell assembly; and
a module cover covering the cell assembly and connected to at least a portion of the accommodating portion and the end plate.

13. The battery module of any one of claims 1 to 12, wherein the plurality of battery cells is stacked in a first direction and the thermal transfer blocking assembly is disposed between two or more adjacent battery cells of the plurality of battery cells and extending in a second direction that is perpendicular to the first direction, and
wherein the slit is extended in the second direction.

14. A battery pack, comprising:
a plurality of battery modules; and
a pack frame structured to accommodate the plurality of battery modules,
wherein each of the plurality of battery modules includes:
a cell assembly including a plurality of battery cells and at least one thermal transfer blocking assembly interposed between two or more adjacent battery cells of the plurality of battery cells;
a module housing including a main plate structured to support the cell assembly;
at least one slit formed on the main plate and arranged to face the at least one thermal transfer blocking assembly; and
a thermally conductive polymer disposed in the at least one slit,
wherein a melting point of the thermally conductive polymer is lower than a melting point of the main plate.

15. The battery pack of claim 14,
wherein the pack frame includes a heat sink structured to support the main plate, and
the at least one slit is disposed between the at least one thermal transfer blocking assembly and the heat sink.
